# EUROPEAN PATENT SPECIFICATION

(11) **EP 1 882 294 B1**
(45) Date of publication and mention of the grant of the patent: **16.05.2012**
(21) Application number: 06744973.6
(22) Date of filing: 18.05.2006
(51) Int. Cl.: H02K 5/15, H02K 11/00, G01P 3/46

(54) **A MOTOR**
MOTOR
MOTEUR

(30) Priority: 18.05.2005 TR 200501869
(43) Date of publication of application: 30.01.2008
(73) Proprietor: Arçelik Anonim Sirketi, 34950 Istanbul (TR)
(72) Inventor: IMAT, Yakup, 34950 Istanbul (TR); ACIKGOZ, Harun, 34950 Istanbul (TR); SONMEZ, Emin, 34950 Istanbul (TR)
(86) International application number: PCT/IB2006/051574
(87) International publication number: WO 2006/123304

(56) References cited:
- EP-A- 0 634 828
- EP-A2- 0 827 260
- DE-C1- 4 142 181

## Description

The present invention relates to a motor comprising a tachogenerator which can easily be mounted or dismounted.

In electric motors, rotational speed is measured by means of tachogenerators. A tachogenerator is basically composed of a rotor and a stator. The rotor of the tachogenerator comprises a magnet, attached to the shaft of the motor and rotating together with the shaft. The stator of the tachogenerator is a fixed component, composed of windings arranged around the shaft and the rotor of the tachogenerator. The rotor of the tachogenerator rotates as the shaft starts to rotate, generating an alternating magnetic field on the coils of the tachogenerator stator. The variable magnetic field generates a current on the windings of the tachogenerator stator relative to the rotational speed of the shaft. This current, being processed with various electrical circuits, is used to determine the speed of the motor.

In the state-of-the-art motors, the stator of the tachogenerator is assembled on the body or on the end shield of the motor, either directly or by means of an adaptor. However, in order to be able to measure the magnetic field fluctuations with precision, the tachogenerator stator has to be arranged coaxially as is required around the shaft and the tachogenerator rotor affixed to it, and once arranged coaxially it should be ensured that it will not be displaced. Therefore the stator is fixed to the motor body by means of methods such as adhesion, plastic/thermoplastic deformation etc.

In another application, the stator of the tachogenerator is affixed to the motor end shield by press-fitting. Afterwards, the stator of the tachogenerator is covered by a plastic casing that is attached to the motor end shield by detents. However the snapfitting method could lead to the damage of the tachogenerator stator thus resulting in incorrect measurement of the motor speed.

In the United States Patent no. US4884000, a tachogenerator stator fixed on the motor housing is described. The tachogenerator stator is fixed on the motor body by utilizing adhesion or thermoplastic deformation method.

In the Japanese Patent no. JP56068244, it is described that the tachogenerator is mounted in a recess on the housing of the motor.

In the United States Patent no. US4174484, a description is given of a motor comprising on its housing a chamber for a tachogenerator. The orifice of the tachogenerator chamber is closed by a cover. The tachogenerator stator is fixed into this chamber.

In the British Patent no. GB 1261926, a frame with a rectangular cross- section wh ich is fixed to the motor by screws and a tachogenerator which is positioned in this frame are described.

In the British Patent no. GB2197136, there is a recess on the motor housing where the tachogenerator coil is enclosed.

In the British Patent no. GB 1381374, a description is given of a tachogenerator stator coil which is fixed to the motor. A cover over the tachogenerator is fitted on the projections of side surfaces by means of its indentations.
Further state-of the art is disclosed in EP 0 634 828 A1, DE 41 42 181 C1 and EP 0 827 260 A2.

In state-of-the-art applications, taking the tachogenerator out for maintenance or replacement can be hard since it is affixed either to the motor body or the end shield.

In applications wherein the tachogenerator is positioned by the help of a casing, the cost of the motor increases due to the cost of the additional component.

The aim of the present invention is to design a motor enabling the tachogenerator to be positioned appropriately, to retain its position and to be easily mounted or dismounted.

The motor according to the present invention is defined in claims 1-9.

The motor of the present invention comprises a tachogenerator that is affixed to the motor end shield by means of a mounting means. The mounting means comprises corresponding pairs of detents and recesses that are integrated with the tachogenerator and the motor end shield. These parts that fit into or come off from each other by being stretched, allow the tachogenerator to be dismounted from its housing when desired. Since this mechanism doesn't require the tachogenerator stator to be press-fitted, the tachogenerator stator is not damaged during assembly. Furthermore assembling and disassembling can be performed in a short time period.

The other elements of the present invention are explained in the dependent claims.

When the detents and recesses are positioned in appropriate positions, the tachogenerator stator can be coaxially arranged around the tachogenerator rotor as required. Thus, there is no need for taking measurements, making adjustments and the like for coaxial arrangement.

The recess can be shaped as an aperture, a cutout, a step, etc. The detent can be shaped like a nail head, a flap, a blade, etc.

A protective component situated over the tachogenerator housing allows the tachogenerator stator to be better positioned within the tachogenerator housing. The protector can be a part of the tachogenerator housing.

The detents, if necessary, can be situated on arms symmetrical to the shaft axis, securing the position of the tachogenerator stator around the tachogenerator rotor.

Since the stator is positioned properly in the tachogenerator housing, the motor speed can be measured with a higher precision. Furthermore, the costs can be lowered since additional components are not necessary for assembling the tachogenerator.

The motor designed to fulfill the aim of the present invention is shown in the attached figures, where:

Figure 1 - is the side view of a motor.

Figure 2 - is the exploded perspective view of detail A in the first embodiment of the motor.

Figure 3 - is the top view of detail A in the first embodiment of the motor.

Figure 4 - is the B-B sectional view in the first embodiment of the motor.

Figure 5 - is the exploded perspective view of detail A in the second embodiment of the motor.

Figure 6 - is the top view of detail A in the second embodiment of the motor.

Figure 7 - is the C-C sectional view in the second embodiment of the motor.

Figure 8 - is the exploded perspective view of detail A in the third embodiment of the motor.

Figure 9 - is the top view of detail A in the third embodiment of the motor.

Figure 10 - is the D-D sectional view in the third embodiment of the motor.

Figure 11 - is the exploded perspective view of detail A in the fourth embodiment of the motor.

Figure 12 - is the top view of detail A in the fourth embodiment of the motor.

Figure 13 - is E-E sectional view of detail F in the fourth embodiment of the motor.

Figure 14 - is the exploded perspective view of detail A in the fifth embodiment of the motor.

Figure 15 - is the top view of detail A in the fifth embodiment of the motor.

Figure 16 - is G-G sectional view in the fifth embodiment of the motor.

Elements shown in the figures are numbered as follows:

1. Motor

2. Motor end shield

3. Tachogenerator housing

4. Aperture

5. Tachogenerator

6. Stator

7. Rotor

8. Shaft

9. Extension

10. Mounting means

11. , 21., 31., 41., 51., Detent

12. , 22., 32., Arm

13. , 23., 33., 43., 53. Recess

24., 34., 54. Protector

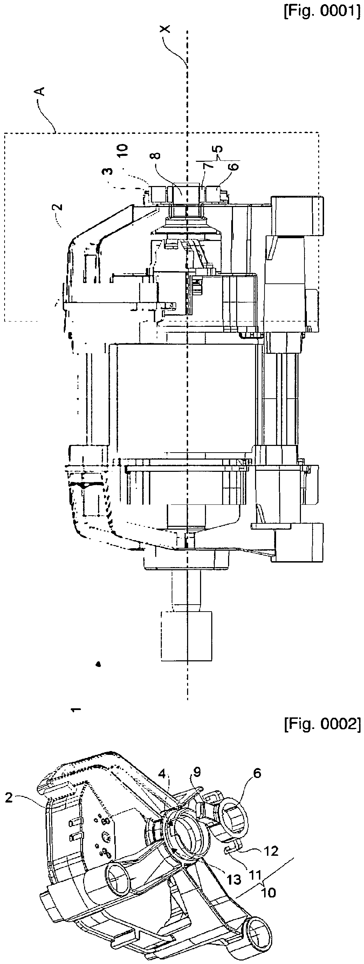

The motor (1), the electric motor in particular, comprises a shaft (8) that transmits the generated kinetic energy as a rotational movement, a motor end shield (2) in which a shaft (8) is rotatably housed, a tachogenerator housing (3), situated on the motor end shield (2) that encircles the housed end of the shaft (8), and a tachogenerator (5) disposed within the tachogenerator housing (3), that produces signals proportional to the speed of the motor (1) (Figure 1).

The tachogenerator (5) comprises a rotor (7) that is affixed to the end of the shaft (8) that stays within the tachogenerator housing (3) and rotates together with the shaft (8), and a stator (6) mounted in the tachogenerator housing (3) so as to encircle the rotor (7), having windings (not shown in the figures) inside which a current is produced due to the magnetic field alterations formed by the rotation of the rotor (7).

The motor (1) of the present invention comprises a mounting means (10) that provides the stator (6) to be assembled in the tachogenerator housing (3) so that it can be mounted or dismounted without the need for any kind of additional components such as a case, etc.. The mounting means (10) comprises at least one pair of a recess (13, 23, 33, 43, 53) and a detent (11, 21, 31, 41, 51), one of which is integrated to the stator (6) and the other to the tachogenerator housing (3), which by being fitted to each other provide the stator (6) to be locked in the tachogenerator housing (3). According to the features of the motor (1) wherein a mounting means (10) is utilized, the recess (13, 23, 33, 43, 53) can be situated in the tachogenerator housing (3), and the detent (11, 21, 31, 41, 51) in the stator (6) or vice versa. When the stator (6) is being mounted in the tachogenerator housing (3), the detent (11, 21, 31, 41, 51) is fitted into the recess (13, 23, 33, 43, 53) by being stretched and the displacement of the stator (6) from the tachogenerator housing (3) is prevented unless the user desires. When force is applied to displace the stator (6) from the tachogenerator housing (3), the detent (11,21,31, 41,51) stretches back to be freed from the recess (13, 23, 33, 43, 53), thus leaving the stator (6) free.

In the preferred embodiment of the present invention, the rotor (7) comprises a disk shaped magnet affixed to the shaft (8). The stator (6) comprises a body, preferably produced of plastic, inside which its coil is embedded, and a part (tachogenerator protection plate) preferably produced of metal, surrounding the body so as to complement the magnetic field. Furthermore the stator (6) comprises an extension (9) through which the winding cables are extended out. This extension (9) protects the winding cables.

The tachogenerator housing (3) has the shape of a bowl that forms a base into which the stator (6) is seated, confined by walls that partially or completely enclose the end of the shaft (8). The tachogenerator housing (3) comprises an aperture on its wall, wherein the extension (9) is fitted, extending outside. Consequently the movement of the stator (6) inside the tachogenerator housing (3) is properly limited, contributing to the measurement of the motor speed with the required precision. The tachogenerator housing (3) is produced either as a single piece with the motor end shield (2) or as separate pieces.

In the first embodiment of the present invention, a recess (13), situated on the outer surface of the tachogenerator housing (3), preferably in form of a step, at least one arm (12) extending from the stator (6) to the recess (13) and a mounting means (10) situated on the arm (12), having a detent (11) that is fitted into the recess (13) are utilized (Figure 2, Figure 3 and Figure 4). The stator (6) is mounted into the tachogenerator housing (3) by being forwarded along the shaft axis (X). At the end of the assembly, the arm (12) stays outside of the tachogenerator housing (3), while the stator (6) is inside. In this embodiment, two arms (12), preferably positioned symmetrically with the shaft axis (X) are utilized. The stator (6) and the tachogenerator housing (3) being in suitable shape and size, the relation of the detent (11) to the recess (13) and positioning of the arms (12) symmetrically with the shaft axis (X) all assist in the proper positioning of he stator (6) and staying fixed at this position.

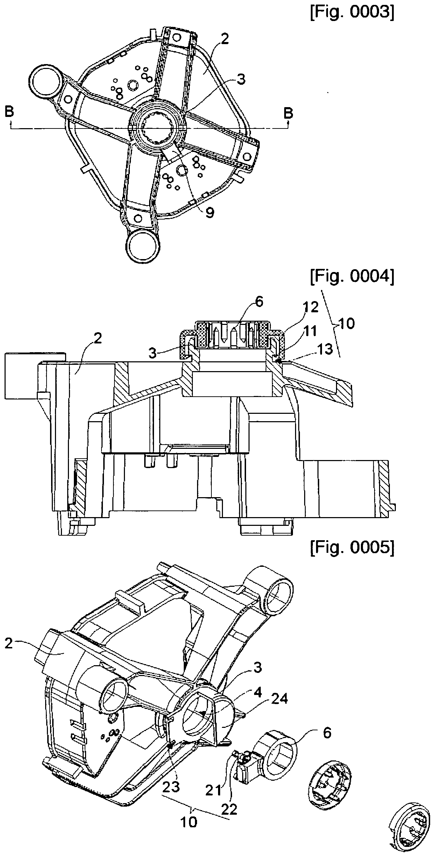

In the second embodiment of the present invention, the tachogenerator housing (3) comprises a protector (24) that partially covers the stator (6). This protector (24) constricts the stator (6) inside the tachogenerator housing (3), preventing its movement in the direction of the shaft axis (X). The mounting means (10) comprises at least one recess (23) situated on the base of the tachogenerator housing (3), at least one arm (22) situated on the stator (6) and extending to the recess (23), and at least one detent (21) on one end of this arm (22) that fits into the recess (23). The orifice of the recess (23) is situated on the same side as the aperture (4) in the tachogenerator housing (3). As the stator (6) is being pushed into the tachogenerator housing (3) in a direction perpendicular to the shaft axis (X), the detent (21) is fitted into the recess (23). The diameter of the arm (22) equals to that of the recess (23), and the diameter of the detent (21) is bigger than that of the recess (23). After the assembly, the detent (21) rests under the recess (23). Consequently when the stator (6) receives a force parallel to the shaft axis (X), it is not displaced; however if pulled in a perpendicular direction to this axis (X) towards the aperture (cutout) (4), it can be displaced, being freed from the recess (23) (Figure 5, Figure 6, and Figure 7).

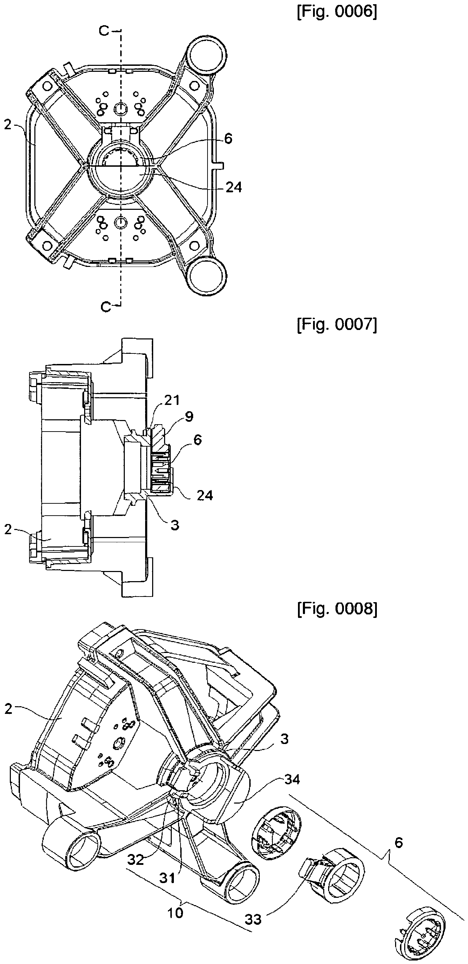

In the third embodiment of the present invention, the tachogenerator housing (3) comprises a protector (34) that partially covers the stator (6); and the mounting means (10) comprises at least one arm (32) that extends from the side of the tachogenerator housing (3), a detent (31) situated at the end of this arm (32), and at least one recess (33) on the stator (6) wherein this detent (31) can be fitted (Figure 8, Figure 9, and Figure 10). The aperture in the tachogenerator housing (3) is of a size suitable for the stator (6) and the extension (9) to pass through. The arms (32) are preferably in the region where the apertures (4) are situated. The extension (9) is extended between the arms (32) ensuring the stator (6) not to rotate within the tachogenerator housing (3) around the shaft axis (X).

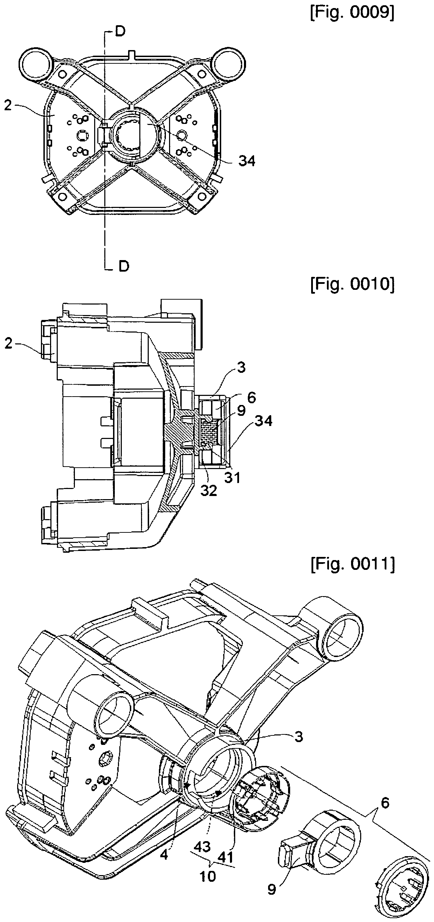

In the fourth embodiment of the motor (1) of the present invention, at least one recess (43) situated on the inner surface of the tachogenerator housing (3) and a mounting means (10) on the outer lateral surface of the stator (6), having detents (41) that fit into the recesses (43) are utilized (Figure 11, Figure 12 and Figure 13). The detents (41) are in shape of small leaf blades formed on the metal part of the stator (6). When the stator (6) is pushed towards the tachogenerator housing (3) along the shaft axis (X), the detents that are stuck to the stator (6) open towards the recess (43) when the stator (6) completely enters the housing, locking in the stator (6).

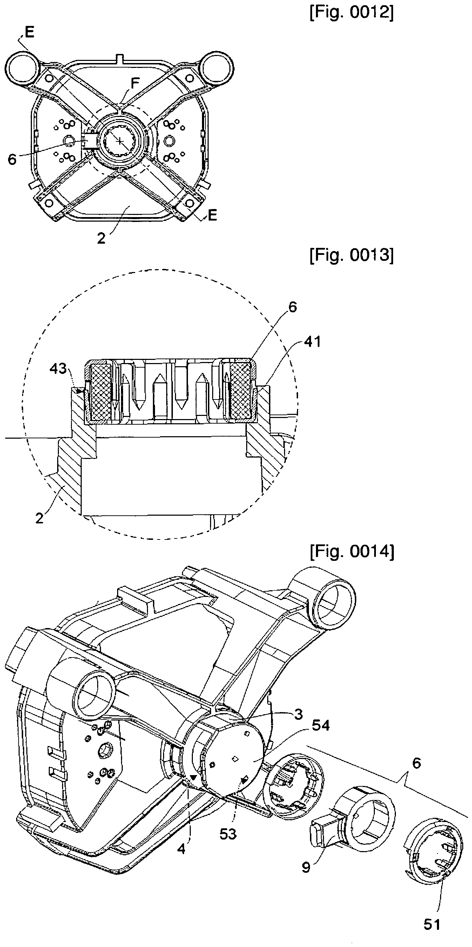

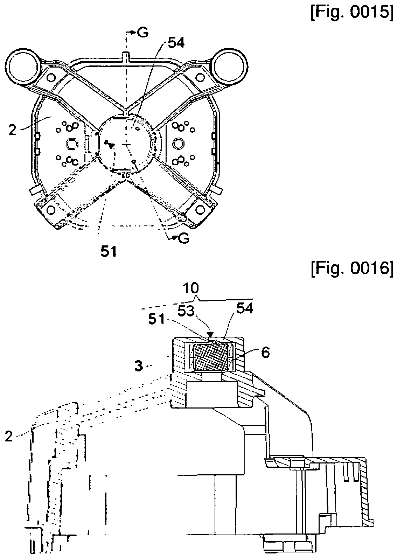

In the fifth embodiment of the present invention, the tachogenerator housing (3) comprises a protector (54) that covers the top of the stator (6). The mounting means (10) comprises at least one recess (53) positioned on this protector (54) and detents (51) on the stator (6) that fit into these recesses (53). The aperture of the tachogenerator housing (3) is of a shape and size that allows the stator (6) to go under the protector (54). When the stator (6) is pushed through this aperture (4) in a direction perpendicular to the shaft axis (X), the detents (51) on the stator (6) are fitted into the recesses (53) on the protector (54) (Figure 14, Figure 15 and Figure 16).

In the motor (1) of the present invention, while the tachogenerator (5) is being assembled, the rotor (7) is affixed to the shaft (8). Afterwards, the stator (6) is mounted in the tachogenerator housing (3). In the meantime, the detents (11, 21, 31, 41, 51) of the mounting means (10) are fitted in the recesses (13, 23, 33, 43, 53) by stretching, and then recover their former position, being locked in. Consequently the stator (6) is not displaced from the tachogenerator housing (3) unless the user so desires. When the user wants to take out the stator (6), some amount of force is applied to extend and free the detents (11, 21, 31, 41, 51) from the recesses (13, 23, 33, 43, 53). Afterwards the stator (6) is held and pulled, to be easily displaced from the tachogenerator housing (3).

In the motor (1) of the present invention, the stator (6) can easily be mounted or dismounted by means of the mounting means (10). Thus, the maintenance of a failing tachogenerator (5) becomes easy. Furthermore the costs are lowered since additional parts such as casings are not necessary. The components of the utilized mounting means (10) ensure the stable positioning of the stator (6).

## Claims

1. An electric motor (1) comprising a shaft (8) that transmits the produced movement, a motor end shield (2) into which the shaft (8) is rotatably housed, a tachogenerator housing (3) situated on the motor end shield (2) through which the shaft (8) extends, and a tachogenerator (5) utilized for measuring the motor speed, having a rotor (7) affixed to the end of the shaft (8) that stays within the tachogenerator housing (3) and rotates together with the shaft (8), and a stator (6) mounted in the tachogenerator housing (3) so as to encircle the rotor (7), having windings inside which a current is generated due to the fluctuations in magnetic field formed by the rotation of the rotor (7), and **characterized by** a mounting means (10) having pairs of recesses (13, 23, 33, 43, 53) and corresponding detents (11, 21, 31, 41, 51), one of which is integrated to the stator (6) and the other to the tachogenerator housing (3), which are fitted into or freed from each other by being stretched, providing the stator (6) to be assembled in the tachogenerator housing (3) in a way that it can be assembled or disassembled.

2. An electric motor (1) as in Claim 1, **characterized by** a tachogenerator housing (3) comprising a protector (24, 34, 54) which at least partially encloses the stator (6) by covering it, thus preventing the unwanted movements of the stator (6) in the direction of the shaft axis (X) within the tachogenerator housing (3).

3. An electric motor (1) as in Claim 1 or 2, **characterized by** the mounting means (10) having an arm (12, 22, 32) on which the detent (11, 21, 31, 41, 51) is situated, extending to the recess (13, 23, 33, 43, 53).

4. An electric motor (1) as in Claim 3, **characterized by** the mounting means (10) comprising a recess (13) on the exterior surface of the tachogenerator housing (3), an arm (12) extending from the stator (6) to the recess (13) and a detent (11) situated at the end of the arm (12) being fitted in the recess (13).

5. An electric motor (1) as in Claim 3, **characterized by** the mounting means (10) comprising at least one recess (23) on the tachogenerator housing (3), and at least one arm (22) situated on the stator (6) and extending to the recess (23), at least one detent (21) situated at the end of this arm (22) being fitted in the recess (23).

6. An electric motor (1) as in Claim 5, **characterized by** the mounting means (10) comprising an arm (22) having an equal diameter to that of the recess (23) and a detent (21) having a diameter greater than that of the recess (23), being kept on the rear side of the recess (23).

7. An electric motor (1) as in Claim 3, **characterized by** the mounting means (10) comprising an arm (32) extending from the side of the tachogenerator housing (3), a detent (31) situated at the end of this arm (32) and at least one recess (33) on the stator (6) wherein the detent (31) can be fitted.

8. An electric motor (1) as in Claims 1 and 3, **characterized by** the mounting means (10) comprising at least one recess (43) on the interior surface of the tachogenerator housing (3), and detents (41) situated on the exterior surface of the stator (6) being fitted in the recess (43).

9. An electric motor (1) as in Claims 2 to 3, **characterized by** an mounting means (10) comprising recesses (53) on the protector (54) and detents (51) on the upper surface of the stator (6) that are fitted in these recesses (53).

## Patentansprüche

1. Elektromotor (1), umfassend eine Wele (8), die die erzeugte Bewegung überträgt, eine Motorendabschirmung (2), in der die Welle (8) drehbar aufgenommen ist, ein Tachogeneratorgehäuse (3), das an der Motorendabschirmung (2) angeordnet ist und durch das sich die Welle (8) erstreckt, und einen Tachogenerator (5), der zum Messen der Motordrehzahl benutzt wird, aufweisend einen Rotor (7), der am Ende der Welle (8) befestigt ist und im Tachogeneratorgehäuse (3) bleibt und sich zusammen mit der Welle (8) dreht, und einen Stator (6), der derart im Tachogeneratorgehäuse (3) montiert ist, dass er den Rotor (7) umgibt, und Windungen aufweist, in denen aufgrund von Schwankungen im Magnetfeld, die durch die Drehung des Rotors (7) entstehen, ein Strom erzeugt wird, und **gekennzeichnet durch** ein Montagemittel (10), das Paare von Vertiefungen (13, 23, 33, 43, 53) und entsprechende Vorsprünge (11, 21, 31, 41, 51) aufweist, von denen eine in den Stator (6) integriert ist und der andere am Tachogeneratorgehäuse (3), und die **durch** Dehnen ineinander eingepasst oder voneinander gelöst werden und so ermöglichen, dass der Stator (6) derart im Tachogeneratorgehäuse (3) angeordnet ist, dass er eingebaut und wieder ausgebaut werden kann.

2. Elektromotor (1) nach Anspruch 1, **gekennzeichnet durch** ein Tachogeneratorgehäuse (3), das einen Schutz (24, 34, 54) umfasst, der den Stator (6) wenigstens teilweise umschließt, indem er ihn abdeckt, und auf diese Weise ungewollte Bewegungen des Stators (6) in Richtung der Wellenachse (X) innerhalb des Tachogeneratorgehäuse (3) verhindert.

3. Elektromotor (1) nach Anspruch 1 oder 2, **dadurch gekennzeichnet, dass** das Montagemittel (10) einen Arm (12, 22, 32) aufweist, an dem der Vorsprung (11, 21, 31, 41, 51) angeordnet ist, der sich in die Vertiefung (13, 23, 33, 43, 53) erstreckt.

4. Elektromotor (1) nach Anspruch 3, **dadurch gekennzeichnet, dass** das Montagemittel (10) eine Vertiefung (13) an der Außenfläche des Tachogeneratorgehäuses (3), einen Arm (12), der sich vom Stator (6) zur Vertiefung (13) erstreckt, und einen Vorsprung (11) umfasst, der am Ende des Arms (12) angeordnet ist und in die Vertiefung (13) eingesetzt ist.

5. Elektromotor (1) nach Anspruch 3, **dadurch gekennzeichnet, dass** das Montagemittel (10) wenigstens eine Vertiefung (23) am Tachogeneratorgehäuse (3) und wenigstens einen Arm (22) umfasst, der am Stator (6) angeordnet ist und sich zur Vertiefung (23) erstreckt, wobei wenigstens ein Vorsprung (21), der am Ende des Arms (22) angeordnet ist, in die Vertiefung (23) eingesetzt ist.

6. Elektromotor (1) nach Anspruch 5, **dadurch gekennzeichnet, dass** das Montagemittel (10) einen Arm (22) umfasst, der einen gleichen Durchmesser wie die Vertiefung (23) aufweist, und einen Vorsprung (21), der einen größeren Durchmesser als die Vertiefung (23) aufweist und an der Rückseite der Vertiefung (23) gehalten wird.

7. Elektromotor (1) nach Anspruch 3, **dadurch gekennzeichnet, dass** das Montagemittel (10) einen Arm (32) umfasst, der sich von der Seite des Tachogeneratorgehäuses (3) erstreckt, einen Vorsprung (31), der am Ende des Arms (32) angeordnet ist, und wenigstens eine Vertiefung (33) am Stator (6), in die der Vorsprung (31) eingesetzt werden kann.

8. Elektromotor (1) nach den Ansprüchen 1 und 3, **dadurch gekennzeichnet, dass** das Montagemittel (10) wenigstens eine Vertiefung (43) an der Innenfläche des Tachogeneratorgehäuses (3) und Vorsprünge (41) umfasst, die an der Außenfläche des Stators (6) angeordnet sind und in die Vertiefung (43) eingesetzt sind.

9. Elektromotor (1) nach den Ansprüchen 2 und 3, **dadurch gekennzeichnet, dass** das Montagemittel (10) wenigstens Vertiefungen (53) am Schutz (54) und Vorsprünge (51) an der Oberfläche des Stators (6) umfasst, die in die Vertiefungen (53) eingesetzt sind.

## Revendications

1. Un moteur électrique (1) comprenant un arbre (8) qui transmet le mouvement produit, une plaque d'extrémité pour moteur (2) dans laquelle l'arbre (8) est placé de manière rotative, un logement du générateur tachymétrique (3) situé sur la plaque d'extrémité pour moteur (2) à travers duquel l'arbre (8) s'étend, et un générateur tachymétrique (5) utilisé pour mesurer la vitesse du moteur, ayant un rotor (7) fixé à l'extrémité de l'arbre (8) qui reste dans le logement du générateur tachymétrique (3) et qui tourne avec l'arbre (8), et un stator (6) monté dans le logement du générateur tachymétrique (3) de manière à encercler le rotor (7), ayant des enroulements dans lesquels un courant est généré en raison des fluctuations dans le champ magnétique formées par la rotation du rotor (7), et **caractérisé par** un moyen de montage (10) ayant des paires d'évidements (13, 23, 33, 43, 53) et des détentes correspondantes (11, 21, 31, 41, 51), dont l'un est intégré dans le stator (6) et l'autre dans le logement du générateur tachymétrique (3), qui sont placés l'un dans l'autre ou libérés l'un de l'autre en étant étirés, permettant au stator (6) d'être assemblé dans le logement du générateur tachymétrique (3) de telle sorte qu'il peut être assemblé ou désassemblé.

2. Un moteur électrique (1) selon la Revendication 1, **caractérisé par** un logement du générateur tachymétrique (3) comprenant un protecteur (24, 34, 54) qui entoure au moins partiellement le stator (6) en le recouvrant, donc empêchant les mouvements indésirables du stator (6) dans la direction de l'axe de l'arbre (X) dans le logement du générateur tachymétrique (3).

3. Un moteur électrique (1) selon la Revendication 1 ou 2, **caractérisé par** le moyen de montage (10) ayant un bras (12, 22, 32) sur lequel la détente (11, 21, 31, 41, 51) est située, s'étendant à l'évidement (13, 23, 33, 43, 53).

4. Un moteur électrique (1) selon la Revendication 3, **caractérisé par** le moyen de montage (10) comprenant un évidement (13) sur la surface extérieure du logement du générateur tachymétrique (3), un bras (12) s'étendant du stator (6) à l'évidement (13) et une détente (11) située à l'extrémité du bras (12) qui est placée dans le logement (13).

5. Un moteur électrique (1) selon la Revendication 3, **caractérisé par** le moyen de montage (10) comprenant au moins un évidement (23) sur le logement du générateur tachymétrique (3), et au moins un bras (22) situé sur le stator (6) et s'étendant à l'évidement (23), au moins une détente (21) située à l'extrémité dudit bras (22) qui est placée dans l'évidement (23).

6. Un moteur électrique (1) selon la Revendication 5, **caractérisé par** le moyen de montage (10) comprenant un bras (22) ayant un diamètre égal à celui de l'évidement (23) et une détente (21) ayant un diamètre supérieur à celui de l'évidement (23), qui reste sur le côté arrière de l'évidement (23).

7. Un moteur électrique (1) selon la Revendication 3, **caractérisé par** le moyen de montage (10) comprenant un bras (32) s'étendant du côté du logement du générateur tachymétrique (3), une détente (31) située à l'extrémité dudit bras (32) et au moins un évidement (33) sur le stator (6) dans lequel la détente (31) peut être placée.

8. Un moteur électrique (1) selon les Revendications 1 et 3, **caractérisé par** le moyen de montage (10) comprenant au moins un évidement (43) sur la surface intérieure du logement du générateur tachymétrique (3) et des détentes (41) situées sur la surface extérieure du stator (6) qui sont placées dans l'évidement (43).

9. Un moteur électrique (1) selon les Revendications de 2 à 3, **caractérisé par** un moyen de montage (10) comprenant des évidements (53) sur le protecteur (54) et des détentes (51) sur la surface supérieure du stator (6) qui sont placées dans ces évidements (53).
